(19) Europäisches Patentamt
European Patent Office
Office européen des brevets

(11) Publication number: 0 126 559
B1

(12) # EUROPEAN PATENT SPECIFICATION

(45) Date of publication of patent specification: 05.07.89

(51) Int. Cl.⁴: C 08 F 214/26, C 09 D 3/78

(21) Application number: 84302832.5

(22) Date of filing: 26.04.84

(54) **Modified fine powder polytetrafluoroethylene.**

(30) Priority: 28.04.83 US 489305

(43) Date of publication of application:
28.11.84 Bulletin 84/48

(45) Publication of the grant of the patent:
05.07.89 Bulletin 89/27

(84) Designated Contracting States:
DE FR GB IT NL

(58) References cited:
GB-A-2 084 593
US-A-3 804 817
US-A-4 123 602

(73) Proprietor: E.I. DU PONT DE NEMOURS AND COMPANY
1007 Market Street
Wilmington Delaware 19898 (US)

(72) Inventor: Gangal, Subhashi Vishnu
1 Fairview Heights
Parkersburg West Virginia 26101 (US)

(74) Representative: Myerscough, Philip Boyd et al
J.A.Kemp & Co. 14, South Square Gray's Inn
London, WC1R 5EU (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 126 559 B1

Courier Press, Leamington Spa, England.

**Description**

Field of the invention

This invention relates to improved polytetrafluoroethylene fine powder and dispersion compositions and to processes for preparing such compositions. The polytetrafluoroethylene contains a small amount of at least one selected fluoroalkyl ethylene copolymerized therewith.

Background of the invention

The polytetrafluoroethylene material of this invention is referred to by those skilled in the art as "fine powder" polytetrafluoroethylene. To make this so-called "fine powder", a process called "aqueous dispersion polymerization" is used. In this process sufficient dispersing agent is employed and agitation is mild in order to produce small colloidal size particles dispersed in the aqueous reaction medium. In this aqueous dispersion polymerization, precipitation (i.e., coagulation) of the resin particles is avoided. The dispersion may be used as such, or the dispersed particles may be coagulated in a separate step and the resulting "fine powder" obtained.

There is another polytetrafluoroethylene material called "granular polytetrafluoroethylene resin". It is used in molding and ram extrusion processes to produce billets and other plastic articles. Granular polytetrafluoroethylene is prepared by polymerizing tetrafluoroethylene by a process in which little or no dispersing agent is employed and agitation is carried out vigorously in order to produce a precipitated resin. This resin is commonly referred to as "granular" resin. The procedure is called "suspension polymerization". When the term "granular" is used herein, it is used to denote the resin formed by the suspension polymerization procedure.

The two polymerization procedures produce distinctly different products. The "granular" produce can be molded in various forms, whereas the "fine powder" produced by the aqueous dispersion method cannot be molded but must be fabricated by dispersion coating or by adding a lubricant for paste extrusion. In contrast, granular resin is incapable of being paste extruded.

Tetrafluoroethylene polymers produced by the aqueous dispersion polymerization method are generally not suited to molding and ram extrusion processing, since they have a very soft sensitive grain, and, due to their molecular weight being lower compared with granular polymers, give extrudates with low mechanical strength.

Dispersion polymerization of tetrafluoroethylene to obtain granular product is generally carried out by filling the polymerization reactor, which is equipped with an agitating system, with an aqueous medium in which a catalyst forming free radicals, optionally a buffer, and a fluorinated emulsifier in an amount sufficient to maintain the polymer particles formed in a dispersed emulsion phase. The air is removed and tetrafluoroethylene is fed into the reactor. After polymerization has started, gaseous tetrafluoroethylene is fed at a rate corresponding to the polymer amount being formed, while keeping the polymerization pressure constant.

It is known in the art that fine powder polytetrafluoroethylene can be modified by adding small amounts of comonomers to the polymerization mixture so that the comonomers in polymerized form become part of the resulting polymer. Two comonomers commonly employed by the art are hexafluoropropylene,

$$CF_3—CF=CF_2,$$

and perfluoro(propyl viny ether),

$$CF_3CF_2CF_2—O—CF=CF_2.$$

However, these comonomers, because of the presence of fluorine atoms on the double bond carbons, do not have as fast a polymerization rate as the tetrafluoroethylene monomer. It would be desirable to find a comonomer that would react more quickly. Perfluorinated alkyl ethylene monomers of the general formula

$$R_fCF=CH_2$$

would react faster; but conventional knowledge in the art, as represented by U.S. 3,804,817 describes copolymers of (perfluoropropyl) ethylene and TFE which possess only modest thermal stability as evidence by thermal gravimetric analysis (TGA) data shown in the patent. The presence of hydrogen on the ethylene carbons of the perfluorinated alkyl ethylenes renders the resulting polymer thermally unstable under normal fine powder sintering temperatures of 350—400°C.

GB—A—2,084,593 discloses copolymers consisting of 93 to 99 mol% tetrafluoroethylene units and 1 to 7 mol% fluorinated alkyl ethylene units. These copolymers cannot be described as fine powder compositions.

It has now been discovered that, surprisingly, perfluorinated alkyl ethylenes are not as thermally unstable as the art has led those skilled in the art to believe. Accordingly, this invention comprises a modified dispersion-prepared polytetrafluoroethylene fine powder composition comprising tetrafluoroethylene polymer containing polymerized units of at least one copolymerizable monomer of the formula

$$Rf—CH=CH_2$$

present in an amount of less than 0.5% based on the weight of polymer such that the melt viscosity of the resulting polymer is at least $1\times10^8$ PaS at 380°C., wherein $R_f$ is a fluorinated alkyl radical of 1—10 carbon atoms which is perfluorinated or which is perfluorinated except for the presence of one substituent attached to a carbon atom of the $R_f$ radical which substituent is selected from hydrogen or halogen other than fluorine (Cl, Br or I), preferably Cl or Br.

The polymers of this invention are of high molecular weight as indicated by their inability to be fabricated by melt flow procedures such as melt extrusion or injection molding. Thus they are "non-melt-fabricable", i.e. are not extrudable from a melt. They are made by the tetrafluoroethylene dispersion polymerization process and thus are the so-called "fine powder" or dispersion tetrafluoroethylene polymers. In view of their non-melt-fabricable nature, the copolymers have melt viscosities above $1 \times 10^8$ PaS measured at 380°C. These high melt viscosities are obtained by keeping the amount of comonomer low. The amount of polymerized comonomer units present complementally to the tetrafluoroethylene units will be less than 0.5%, and most preferably less than 0.2%, by weight of total polymer weight. As a minimum amount present, preferably at least 0.01% of the comonomer will be present in copolymerized form.

Examples of comonomers that can be used to make the polymers of this invention include

$CF_3—CF_2—CH=CH_2$;
$CF_3(CF_2)_9CH=CH_2$;
$CF_2H—CF_2—CH=CH_2$;
$CF_2H(CF_2)_9CH=CH_2$;
$CF_2Br—CF_2—CH=CH_2$;
$CF_2Br(CF_2)_9CH=CH_2$;
$CF_3—CFH—CF_2—CH=CH_2$,

and the like. Mixutres of comonomers may be used. Perfluorobutyl ethylene,

$$CF_3—(CF_2)_3CH=CH_2$$

is preferred.

The process used to prepare the polymers of this invention is the usual dispersion polymerization process used to prepare dispersion-produced polytetrafluoroethylene. Such polymerization is described in a number of patents such as U.S. Patent 3,142,665 or 3,391,099. In brief, tetrafluoroethylene is pressured into an autoclave containing water and conventional free-radical polymerization initiators along with paraffin wax to suppress coagulum formation and an emulsifying agent. The reaction mixture is agitated mildly and the polymerization is carried out at suitable temperatures and pressures. Upon completion of the polymerization, the resulting aqueous dispersion can be used as such, or the dispersed polymer particles can be coagulated by usual techniques known in the art to obtain fine powder modified polytetrafluoroethylene. The comonomers react much faster than tetrafluoroethylene monomer and comonomer addition rate is important to the distribution of comonomer achieved in the polymer. The comonomer can be added as a single charge, in which case, the comonomer is found in polymerized form mostly in the core of the polymer particle. Or comonomer addition may be delayed until pure polytetrafluoroethylene has formed as a core, and then comonomer added to achieve a core-shell particle in which comonomer is present in the shell portion. Alternatively, comonomer may be added in increments, or continuously, throughout the polymerization to obtain a polymer particle having the comonomer in polymerized form distributed throughout the particle.

Particle size in the dispersion can be controlled by known procedures. For example, addition of dispersing agent can be programmed as described in USP 3,391,099 to obtain the desired particle size.

The polymerization temperature will ordinarily be between 50—110°C and the initiator will be a peroxide or persulfate. A buffer to maintain pH at between 6—9 may be used if desired. Agitation will be mild, so that no coagulation of polymer particles occurs. If desired following polymerization, the dispersed particles can be coagulated by mechanical agitation.

The polymers of this invention have high melt viscosities and are suitable in dispersion form as coating material, as for example onto glass fabric. Fine powder is useful in making tubing, unsintered tape, and wire and cable insulation.

A distinction must be made between the dispersion-prepared polymers of this invention and tetrafluoroethylene copolymers having a higher content of comonomer. The latter contain enough comonomer to permit them to be processed from a melt by extrusion methods customary for thermoplastics. The polymers of this invention, like unmodified polytetrafluoroethylene itself, belong to the type of tetrafluoroethylene polymers that are not extrudable from the melt, and special molding methods must be used to fabricate them.

Furthermore, being dispersion-made, the polymers of this invention have a morphology which differs from that of granular polymers. The polymers of this invention are produced in the presence of such high amounts of emulsifier that, after polymerization has ended, they remain in colloidal distribution in the aqueous medium. These fine powder polymers are obtained from the colloidal dispersion by coagulation and on coagulation form agglomerates from colloidal primary particles with an average particle diameter of about 0.1 to 0.5 μm. Polymers produced by suspension techniques to obtain granular polymers are not like these. For example, as is known to one skilled in the art, fine powder polymers cannot be molded by ram extrusion or mold-sinter processing techniques, even if they contain comonomer modifiers.

Properties of the polymers obtained in the Examples which follow are obtained according to the procedures set forth below:

1) Determination of comonomer content

The comonomer content was determined by infrared spectroscopy. Films were pressed at room temperature and a Perkin Elmer 283B infrared spectrophotometer was used to determine the absorption of the $CH_2$ bending at 876 $cm^{-1}$.

2) Standard specific gravity (SSG)

Standard specific gravity (SSG) of the molding powder is measured by water displacement of a standard molded test specimen in accordance with ASTM D1457—69. The standard molded part is formed by preforming 12.0 g. of the molding powder in a 2.86 cm. diameter die at a pressure of 34.48 and 6.90 MPa (352 and 70.4 kg/cm$^2$), followed by the sintering cycle of the preform of heating from 300° to 380°C. at 2°C./min., holding at 380°C. for 30 minutes, cooling to 295°C. at 1°C./min. and holding at this temperature for 25 minutes, after which the specimen is cooled to room temperature and tested for specific gravity.

3) Melt viscosity

Melt viscosity is calculated by measuring the tensile creep of a sintered piece held at 380°C. Specifically, 12 g. of molding powder is placed in a 7.6 cm. diameter mold between 0.152 cm. rubber cauls and paper spacers. Pressure is then slowly applied on the mold until a value of 40.5 Kg./cm.$^2$ (3.97 MPa) is obtained. This pressure is held for 5 minutes and then released slowly. After the sample disc is removed from the mold and separated from the cauls and paper spacers, it is sintered at 380°C. for 30 minutes. The oven is then cooled to 290°C. at a rate of about 1°C./minute and the sample is removed. A crack-free rectangular sliver with the following dimensions is cut: 0.152 to 0.165 cm. wide, 0.152 to 0.165 cm. thick, and at least 6 cm. long. The dimensions are measured accurately and the cross-sectional area is calculated. The sample sliver is attached at each end to quartz rods by wrapping with silver-coated copper wire. The distance between wrappings is 4.0 cm. This quartz rod-sample assembly is placed in a columnar oven where the 4 cm. test length is brought to a temperature of 380°±2°C. A weight is then attached to the bottom quartz rod to give a total weight suspended from the sample sliver of about 4 g. The elongation measurements vs. time are obtained, and the best average value for the creep curve in the interval between 30 and 60 minutes is measured. The melt viscosity is then calculated from the relationship

$$app=(WL_tg)/3(dL_t/dt)A_T$$

wherein

app=(apparent) melt viscosity in shear, poises

W=tensile load on sample, g

$L_t$=length of sample (at 380°C.) cms. (4.32 cm.)

g=gravitational constant, 980 cm./sec.$^2$

$(dL_t/dt)$=rate of elongation of sample under load=slope of elongation vs. time plot, cm./sec.

$A_T$=cross-sectional area of sample (at 380°C), cm$^2$—area increases 37% at 380°C over that at room temperature.

4) Average dispersion particle size

The average dispersion particle size was determined from the absorbance (scattering) of a dilute aqueous sample at 546 m using a Beckman DU Spectrophotometer.

5) Thermal instability index (TII)

ITT was measured according to the procedure specified in ASTM Designation D-1457-81a, pt. 36, p. 111, May 1982, Standard Specification for PTFE Molding and Extrusion Materials.

6) Rheometric pressure

These values were measured by the method of ASTM D1457, Sec. 12.8.

Examples

Example 1

The following polymerization was conducted: a horizontally disposed, water/steam jacketed, cylindrical, stainless steel autoclave, located in a barricade and having a capacity of 36,250 cc. and a length-to-diameter ratio of about 1.5 to 1, and provided with a 4-bladed, cage-type agitator capable of being rotated at 46 rpm and running the length of the autoclave, was evacuated, and then charged with 855 g. of paraffin wax, 21.8 kg. of demineralized water, and 30 g. of ammonium perfluorocaprylate (C-8, APFC) dispersing agent. The autoclave was then heated to 65°C, evacuated and purged with nitrogen. It was then agitated at 46 rpm., heated to 80°C and pressured with tetrafluoroethylene to 27.7 kg./cm.$^2$ (2.72 MPa) absolute and 0.400 g. of ammonium persulfate (APS) dissolved in 400 ml. of water was injected over a 4 minute period. When kick off occurred, as evidenced by 1.4 kg./cm.$^2$ (137 KPa) drop in pressure, injection of perfluorobutylethylene (PFBE) at 0.2 ml./min. was begun, and tetrafluoroethylene pressure was increased to 29.2 kg./cm.$^2$ (2.86 MPA). This pressure and rate of perfluorobutylethylene addition was maintained until 11.8 kg. of tetrafluoroethylene had reacted. After 11.8 kg. of tetrafluoroethylene had reacted and 20.3 g. perfluorobutylethylene had been added, addition of both monomers was terminated. Reaction was allowed to continue until the pressure decreased to 13.4 kg./cm.$^2$ (1.31 MPa) and the autoclave was vented. The time from kick-off to vent was 81 minutes.

The resulting dispersion was discharged from the autoclave, cooled, and the supernatant was was removed. The dispersion was 35.6% solids and had a raw dispersion average particle size of 0.142 µm.

The dispersion was diluted to 15% solids with demineralized water, made basic with ammonia and agitated vigorously until it coagulated. After coagulation it was agitated for an additional 7 minutes and then dried at 150°C.

The resin had a standard specific gravity of 2.152 and the PFBE content by infrared analysis was 0.17% indicating incorporation of all the perfluorobutylethylene which was charged to the autoclave. It had a surprisingly low thermal

instability index of 9.4. Its extrusion pressure of 444 kg/cm$^2$ (at 400:1 reduction ratio) and melt creep viscosity of $9.6\times10^{10}$ poises ($9.6\times10^9$ Pa · s) indicate a good candidate for hose and tubing applications.

Example 2

The procedure of Example 1 was repeated except the initiators, 15 g. of disuccinic acid peroxide and 0.10 g. of ammonium persulfate, were added just before pressuring to 27.1 kg./cm.$^2$ (2.66 MPa), absolute with tetrafluoroethylene. The polymerization was conducted at 90°C., 27.7 kg./cm.$^2$ (2.72 MPa), and the perfluorobutylethylene was injected at 0.25 ml./min. from kick-off until 5.9 kg. of tetrafluoroethylene had reacted and then an additional 5.9 kg. of tetrafluoroethylene was reacted.

A total of 17.1 g. of perfluorobutylethylene was added and the polymerization time was 93 minutes. The product which had a raw dispersion particle size of 0.150 µm was discharged and coagulated as in Example 1.

Since the Example 1 showed that perfluorobutylethylene is rapidly incorporated into the polymer, and perfluoroethylene addition in Example 2 stopped after half of the tetrafluoroethylene had been polymerized, a shell-core particle having the comonomer primarily in the core was expected. The produce had an SSG of 2.166, a melt creep viscosity of $8.9\times10^{10}$ poises ($8.9\times10^9$ Pa · s) and the surprisingly low TII of 6.7. Its extrusion pressure was 911 kg./cm.$^2$ (89.3 MPa) at 1600:1 reduction ratio. An unsintered tape made by calendaring a lubricated paste extrude was uniform in width and had smooth edges.

Example 3

The procedure of Example 1 was essentially repeated except 0.30 g. of ammonium persulfate was used and only 3 g. of C-8 APFC dispersant was initially charged. An additional 27 g. of C-8 APFC dissolved in 1000 ml. of demineralized water was pumped in after 0.9 kg. tetrafluoroethylene reacted. (The initial water charge was reduced by 0.9 kg. to compensate for the water pumped with the C-8 APFC). The perfluorobutylethylene addition was begun during pressure up with tetrafluoroethylene and continued at a rate of 0.25 ml./min. until tetrafluoroethylene feed ceased. A total of 11.8 kg. of tetrafluoroethylene and 27.8 g. of perfluorobutylethylene was added. The reaction time was 73 minutes.

The dispersion from this example had an RDPS of 0.206 µm and the coagulated product had a SGG of 2.146, a melt creep viscosity of $9.3\times10^{10}$ poises ($9.3\times10^9$ Pa · s) and a TII of 12.6. These properties plus a low extrusion pressure of 649 kg./cm.$^2$ (63.6 MPa) (1600:1 reduction ratio) make this a good candidate for wire coating, hose and tubing applications.

Example 4

The procedure of Example 3 was followed except that the initiators were 5 g. of disuccinic acid peroxide and 0.40 g. ammonium persulfate, polymerization was at 75°C., and perfluorobutylethylene addition ceased after 10.5 kg. of tetrafluoroethylene had reacted. A total of 44.5 g. of perfluorobutylethylene and 11.8 kg. of tetrafluoroethylene were added during the reaction time of 165 minutes.

The dispersion had an RDPS of 0.178 µm and the coagulated produced had a SGG of 2.146, a melt creep viscosity of $7.7\times10^{10}$ poises ($7.7\times10^9$ Pa · s), and a TII of 9.6. The extrusion pressure was 856 kg./cm.$^2$ (83.9 MPa). (1600:1 reduction ratio). This resin would be suitable for wire coating.

Example 5

The procedure of Example 4 was followed except all the C-8 APFC (30 g.) was charged initially, and the perfluorobutylethylene addition was continued until tetrafluoroethylene feed was stoppd.

The dispersion had a RDPS of 0.147 µm and the coagulated product had an SSG of 2.143, a melt creep viscosity of $11.2\times10^{10}$ poises ($11.2\times10^9$ Pa · s), and a TII of 10.7. As expected for the more uniform distribution of comonomer throughout the particle, the extrusion pressure of 740 kg./cm.$^2$ (72.6 MPa) (1600:1 reduction ratio) was lower than in Example 4.

Example 6

The procedure of Example 2 was followed except the initiator was 30 g. of disuccinic acid peroxide and 0.44 g. iron was added. Also 2 g. of C-8 APFC dispersant was charged to the autoclave initially followed by 28 g. additional C-8 APFC after 0.9 kg. of tetrafluoroethylene had reacted. The perfluorobutylethylene, 29 g, was all charged to the autoclave before it was pressured up with tetrafluoroethylene.

The dispersion had a RDPS of 0.179 µm and the coagulated product had an SSG of 2.152, a melt creep viscosity of $9.6\times10^{10}$ poises ($9.6\times10^9$ Pa · s), and its extrusion pressure was 813 kg./cm.$^2$ (79.7 MPa) which is higher than the product of Examples 4 and 5.

Example 7

The procedure of Example 6 was followed except that perfluorobutylethylene was added continuously at 0.20 ml./min. from tetrafluoroethylene pressure up until the tetrafluoroethylene feed valve was closed. Also the initial C-8 APFC charge was 10 g. and an additional 20 g., dissolved in 1000 ml. of demineralized water, was added after 0.9 kg. of tetrafluoroethylene had been added.

The dispersion had a RDPS of 0.153 µm and the coagulated product had an SSG of 2.158, a melt creep viscosity of $9.6\times10^{10}$ poises ($9.6\times10^9$ Pa · s), and the very low extrusion pressure of 444 kg./cm.$^2$ (43.5 MPa) (1600:1 reduction ratio) making it appropriate for wire coating evaluation.

**Claims**

1. A tetrafluoroethylene polymer fine powder composition produced by aqueous dispersion polymerization wherein the polymer comprises polymerized units of tetrafluoroethylene and at least one copolymerizable monomer of the formula

$$R_f—CH=CH_2$$

wherein $R_f$ is a fluorinated alkyl radical of 1—10 carbon atoms which is either perfluorinated or which is perfluorinated except for the presence one substituent attached to a carbon atom of the $R_f$ radical which substituent is selected from hydrogen or halogen other than fluorine, the copolymerisable monomer being present in an amount of less than 0.5% by weight based on the weight of polymer such that the polymer has a melt viscosity of at least $1\times10^8$PaS at 380°C.

2. A composition according to claim 1 wherein the copolymerizable monomer of the formula

$$R_f—CH=CH_2$$

is one in which $R_f$ is perfluorinated.

3. A composition according to claim 1 wherein the copolymerizable monomer of the formula

$$R_f—CH=CH_2$$

is perfluorobutyl ethylene.

4. A composition according to any one of claims 1 to 3 in the form of an aqueous dispersion.

5. A composition according to any one of claims 1 to 3 in the form of a powder.

6. A process for making a modified tetrafluoroethylene polymer fine powder composition by carrying out the aqueous dispersion polymerization of tetrafluoroethylene and at least one comonomer in the presence of an emulsifying agent, wherein, as a comonomer, a monomer of the formula

$$R_f—CH=CH_2$$

wherein $R_f$ is as defined in claim 1, is used in an amount such that the final polymer comprises less than 0.5% by weight of the comonomer.

7. Use of a composition as claimed in claim 4 as a coating material.

8. Use of a composition as claimed in claim 5 in the preparation of shaped articles by preforming and sintering.

**Patentansprüche**

1. Feine Tetrafluoroethylenpolymerpulver-Zusammensetzung, hergestellt durch wässrige Dispersionspolymerisation, worin das Polymer polymerisierte Einheiten von Tetrafluoroethylene und wenigstens eines copolymerisierbaren Monomers der Formel umfasst

$$R_f—CH=CH_2$$

worin $R_f$ ein fluorierter Alkylrest mit 1 bis 10 Kohlerstoffatomen ist, der entweder perfluoriert ist oder ausser der Gegenwart eines an ein Kohlenstoffatom des $R_f$-Restes angehefteten Substituenten perfluoriert ist, welcher Substituent aus Wasserstoff und von Fluor verschiedenen Halogen ausgewählt ist, wobei das copolymerisierbare Monomer in einer Menge von weniger als 0,5 Gew.-%, bezogen auf das Gewicht des Polymers, zugegen ist, so dass das Polymer eine Schmelzviskosität von wenigstens $1\times10^8$ Pas bei 380°C aufweist.

2. Zusammensetzung nach Anspruch 1, worin das copolymerisierbare Monomer der Formel

$$R_f—CH=CH_2$$

eines ist, worin $R_f$ perfluoriert ist.

3. Zusammensetzung nach Anspruch 1, worin das copolymerisierbare Monomer der Formel

$$R_f—CH=CH_2$$

Perfluorobutylethylen ist.

4. Zusammensetzung nach einem der Ansprüche 1 bis 3 in Form einer wässrigen Dispersion.

5. Zusammensetzung nach einem der Ansprüche 1 bis 3 in Form eines Pulvers.

6. Verfahren zur Herstellung einer modizierten feinen Tetrafluoroethylenpolymerpulver-Zusammensetzung durch Ausführen einer wässrigen Dispersionspolymerisation von Tetrafluoroethylen und wenigstens einem Comonomer in Gegenwart eines Emulgiermittels, worin als Comonomer ein Monomer der Formel

$$R_f—CH=CH_2$$

worin $R_f$ wie in Anspruch 1 definiert ist, in einer Menge verwandt wird, dass das Endpolymer weniger als 0,5 Gew.-% des Comonomers umfasst.

7. Verwendung einer Zusammensetzung, wie in Anspruch 4 beansprucht, als Überzugsmaterial.

8. Verwendung einer Zusammensetzung, wie in Anspruch 5 beansprucht, bei der Herstellung von Formteilen durch Vorformen und Sintern.

**Revendications**

1. Une composition de polymère de tétrafluoréthylène en poudre fine, produite par polymérisation en dispersion aqueuse, dans laquelle le polymère comprend des motifs polymérisées de tétrafluoroéthylène et d'au moins un monomère copolymérisable de la formule

$$R_f—CH=CH_2$$

où $R_f$ est un radical alkyl fluoré de 1 à 10 atomes de carbone qui est perfluoré ou bien qui est perfluoré à l'exception de la présence d'un substituant fixé à un atome de carbon du radical $R_f$, ledit substituant étant choisi entre l'hydrogène en un halogène

autre que le fluor, le monomère copolymérisable étant présent en une proportion inférieure à 0,5% en poids par rapport au poids du polymère, de sorte que le polymère ait une viscosité à l'état fondu d'au moins $1 \times 10^8$ Pa · s à 380°C.

2. Une composition selon la revendication 1, dans laquelle le monomère copolymérisable de la formule

$$R_f—CH=CH_2$$

est d'un type dans lequel $R_f$ est perfluoré.

3. Une composition selon la revendication 1, dans laquelle le monomère copolymérisable de la formule

$$R_f—CH=CH_2$$

est le perfluorobutyl-éthylène.

4. Une composition selon l'une quelconque des revendications 1 à 3, sous la forme d'une dispersion aqueuse.

5. Une composition selon l'une quelconque des revendications 1 à 3, sous la forme d'une poudre.

6. Un procédé pour préparer une composition de polymère de tétrafluoroéthylène en poudre fine, en effectuant la polymérisation en dispersion use de tétrafluoroéthylène et d'au moins un comonomère en présence d'un agent émulsionnant, dans lequel on utilise, comme comonomère, un monomère de la formule

$$R_f—CH=CH_2$$

où $R_f$ est tel que défini dans la revendication 1, en une proportion telle que le polymère final contienne moins de 0,5% en poids du comonomère.

7. Utilisation d'une composition telle que revendiquée dans la revendication 4 en taut que matière de revêtement.

8. Utilisation d'une composition telle que revendiquée dans la revendication 5 dans la fabrication d'articles façonnés par préformage et frittage.